# EUROPEAN PATENT APPLICATION

(11) **EP 4 745 007 A1**
(43) Date of publication of application: **20.05.2026**
(21) Application number: 24212817.1
(22) Date of filing: 13.11.2024
(51) Int. Cl.: B62D 13/02

(54) **A SYSTEM FOR TURNING A WALKING BEAM SUSPENSION RELATIVE TO A TRAILER FRAME**

(71) Applicant: OÜ Country, 44106 Kunda Lääne-Viru maakond (EE)
(72) Inventor: Kokerov, Marek, 44106 Kunda (EE)
(74) Representative: AAA Patendibüroo OÜ

(57) **Abstract**

Present invention relates to a system for turning a balanced tandem axle relative to a trailer (1) frame (2) around the turning axis (4) located on the frame (2). The balanced tandem axle comprises an axle beam (3) rotatably attached to the frame (2) of the trailer (1) with walking beams at the ends of the axle beam (3) and perpendicular to the longitudinal axis of the axle beam (3), which can pivot around the longitudinal axis of the axle beam (3). The wheels of the trailer (1) at the ends of the walking beams, the rotational axes of which are parallel to the axle beam (3). Between the axle beam (3) and the frame (2) of the trailer (1) is at least one hydraulic cylinder (HC1, HC2) for turning the axle beam (3) relative to the frame (2) of the trailer (1). A rotation of the left wheel (6c) and a rotation of the right wheel (6d) of the rear wheels (6c, 6d) of the trailer (1), when viewed in the direction of forward movement of the trailer, can be separately blocked with a hydraulic system.

## Description

### TECHNICAL FIELD

The invention relates to a solution for controllably turning a balanced tandem axle. Specifically, the present invention relates to a turnable, balanced tandem axle of a trailer, more specifically a forestry and agricultural trailer, where the balanced tandem axle as a whole is turnable relative to the frame of the trailer.

### BACKGROUND ART

Trailers towed behind a vehicle, such as a tractor, forestry tractor or harvester, are often equipped with a balanced tandem axle, where the axle beam is fastened to the trailer frame, and walking beams, which can pivot around the longitudinal axis of the axle beam, are located at the ends of the axle beam perpendicularly to the longitudinal axis of the axle beam. The wheels of a trailer are in turn located at the ends of the walking beams, the rotational axes of which are parallel to the axle beam.

Manoeuvring in the forest and on rough terrain often requires turning around obstacles, such as tree trunks, stumps, stones, and other objects located on the moving path. In order to increase the ability to manoeuvre, solutions are used, where wheels or axles of a trailer can be turned relative to the trailer frame, in order to reduce the turning radius of the vehicle with a trailer.

An option is to turn the whole balanced tandem axle relative to the trailer frame, i.e. to turn the axle beam together with the wheels located at the ends of the walking beams relative to the trailer frame, so that when the axle beam is turned, the rotational axes of the wheels located at the ends of the walking beams remain mutually parallel.

US10538134B2 describes a balanced tandem axle of an agricultural device, which is connected to the trailer only by the axle beam of the balanced tandem axle.

US4702488A (published October 27 1987) describes turning of a double-axle rear axle of a semi-trailer as an integral unit, depending on the turning position of the vehicle relative to the semi-trailer. This solution does not enable to turn rear axle of a semi-trailer independently of the position of the vehicle relative to the semi-trailer.

The objective of the present invention is to provide a system for turning a balanced tandem axle relative to a frame of a trailer, which enables to turn the balanced tandem axle independently of the position of the vehicle relative to the longitudinal axis of the trailer.

### SUMMARY OF THE INVENTION

The present invention provides a system for turning a balanced tandem axle relative to a frame of a trailer, said balanced tandem axle comprising an axle beam rotatably attached to the frame of the trailer and walking beams at the ends of the axle beam perpendicular to the longitudinal axis of the axle beam. The walking beams are pivotable around the longitudinal axis of the axle beam and at the ends of the walking beams are the wheels of the trailer, where the rotational axes of the wheels are parallel to the axle beam.

Between the axle beam and the frame of the trailer are hydraulic cylinders for turning the axle beam relative to the frame of the trailer. In other words, a hydraulic cylinder is located between the frame and the axle beam on either side of the frame.

When viewed in the direction of forward movement of the trailer, the rear wheels or the front wheels of the trailer can be braked and blocked separately from the travel braking system of the trailer, i.e. one left or one right wheel can be separately braked and blocked. In other words, rear wheels can be separately braked until blocking from the control panel of the hydraulic system.

In this solution, the brakes of front wheels in the travel direction of the trailer can be dosed by pressing the brake pedal of the vehicle until blocking of rotation of these wheels, but the rear wheels of the trailer can be essentially only blocked with the hydraulic system, i.e. on the hubs of the rear wheels, the brake has an on-off position, where brake cylinder cannot be operated halfway, in order to brake the wheel lightly, but the wheel can only be braked to stop, i.e. its rotation can be blocked. The purpose of blocking is to prevent rotation of the specific wheel in opposite direction.

Present invention provides a system for turning a balanced tandem axle relative to a frame of a trailer around a turning axis located on the frame, where the balanced tandem axle comprises a axle beam rotatably attached to the frame of the trailer with walking beams at the ends of the axle beam and perpendicular to the longitudinal axis of the axle beam, which can pivot around the longitudinal axis of the axle beam, and wheels of the trailer at the ends of the walking beams, where the rotational axes of said wheels are parallel to the axle beam, where between the axle beam and the frame of the trailer is at least one hydraulic cylinder for turning the axle beam relative to the frame of the trailer.

A rotation of the left wheel and a rotation of the right wheel of the rear wheels of the trailer, when viewed in the direction of forward movement of the trailer, can be separately blocked with a hydraulic system, i.e. in other words, rotation of wheel is blocked.

Viewed in the forward moving direction of the trailer, rotation of the left wheel and the right wheel of the rear wheels of the trailer can be separately blocked with the hydraulic system.

The hydraulic system comprises brake cylinders for braking the rear wheels. The brake cylinders are not located in the wheel hubs, but separately from the wheel hubs on the walking beam. Brake cylinder is used for moving the hub brake lever, which applies the brake inside the wheel hub.

Balanced tandem axle can be turned with the hydraulic system relative to the frame by hydraulic cylinders between the frame of the trailer and the axle beam on either side of the said frame.

In order to turn the balanced tandem axle to the right, when viewed in forward moving direction, the rear right wheel of the trailer has been braked with the hydraulic system, and at the same time the axle beam is forced to turn relative to the frame of the trailer by hydraulic cylinders between the frame of the trailer and the axle beam on either side of the said frame.

In order to turn the balanced tandem axle to the left, when viewed in forward moving direction, the rear left wheel of the trailer has been braked with the hydraulic system, and at the same time the axle beam is forced to turn relative to the frame of the trailer by hydraulic cylinders between the frame of the trailer and the axle beam on either side of the said frame.

When turning the axle beam relative to the frame of the trailer, one hydraulic cylinder is pushing and the other is pulling.

The hydraulic system of the system comprises a control unit, which can be installed in the driver's cab of the vehicle. This enables to lock/unlock rear wheels of the trailer in such a way that the user does not need to exit the vehicle (tractor).

A force for rotating the axle beam can be used to push the trailer forward together with the towing vehicle, i.e. the towing tractor, which provides a possibility to push vehicle free in case vehicle gets stuck.

The rear wheels of the trailer can be locked/unlocked in such a way that the user need not to exit the vehicle (tractor).

A separate pin is used for fixing the axle beam in central position, which locks the axle beam in central position.

The control unit comprises two buttons that can be used to execute four movements.
a) The axle beam is moved to the left by the hydraulic cylinder. Brake blocking is not applied. Movement continues as long as the button is pressed. The position of the angle of the axle beam can be fixed at any moment by releasing the button. In order to restore the position of the axle beam, a button of opposite direction must be pressed. Maximum turning angle is 25 degrees.
b) The axle beam is moved to the right by the hydraulic cylinder. Brake blocking is not applied. Movement continues as long as the button is pressed. The position of the angle of the axle beam can be fixed at any moment by releasing the button. Maximum turning angle is 25 degrees.
   In order to restore the position of the axle beam, a button of opposite direction must be pressed.
c) The axle beam is moved to the left by the hydraulic cylinder. When the button is pressed, the brake inside the hub of the left rear wheel of the trailer operates, blocking a rotation of the left rear wheel. Braking and movement of the hydraulic cylinder continues as long as the button is pressed. The position of the angle of the axle beam can be fixed at any moment by releasing the button (at the same moment also the brake is released). Maximum turning angle is 25 degrees.
   The braked rear wheel functions as a turning point, around which the balanced tandem axle is turned, and additionally the frame is pushed forward in the direction of the vehicle with hydraulic cylinders upon turning of the axle beam relative to the frame.
d) The axle beam is moved to the right by the hydraulic cylinder. When the button is pressed, the brake inside the hub of the right rear wheel of the trailer operates, blocking a rotation of the right rear wheel. Braking and movement of the cylinder continues as long as the button is pressed. Maximum turning angle is 25 degrees. The position of the angle of the axle beam can be fixed at any moment by releasing the button (at the same moment also the brake is released).
The braked rear wheel functions as a turning point, around which the balanced tandem axle is turned, and additionally the frame of the trailer is pushed forward in the direction of the vehicle with hydraulic cylinders upon turning of the axle beam relative to the frame.

This solution enables to achieve the following:
- Better manoeuvrability of the trailer, especially a forestry trailer;
- The trailer can be guided around obstacles (stones, stumps);
- The described movement, where the balanced tandem axle is turned alternately around left and right blocked rear wheel, while moving the trailer frame forward, produces independent 'crawling' forward movement, with which the vehicle having got stuck in mud or soft soil when moving on rough terrain can be pushed out with the help of the connected trailer.

### BRIEF DESCRIPTION OF DRAWINGS

The present invention is described below with reference to the appended schematic illustrations, where:

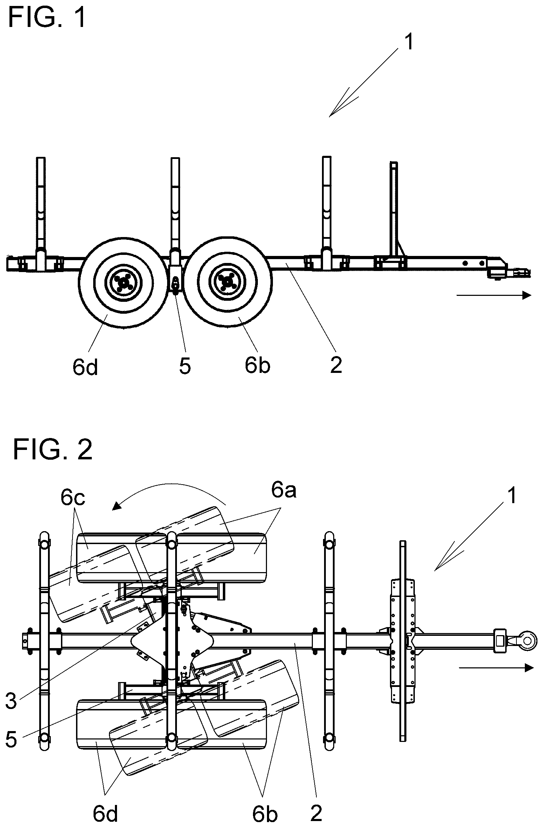

Figure 1 is a side view of a trailer of the present invention, more specifically a forestry trailer;
Figure 2 is a top view of a trailer of Figure 1, where the dotted line illustrates the position of the balanced tandem axle turned to the left;
Figure 3 is a schematic bottom view of the balanced tandem axle and trailer frame in straight position of the balanced tandem axle;
Figure 4 is a schematic bottom view of the balanced tandem axle and trailer frame in the left turned position of the balanced tandem axle;
Figure 5 is a schematic bottom view of the balanced tandem axle and trailer frame in the right turned position of the balanced tandem axle;
Figure 6 illustrates a part of the hydraulic system for turning the axle beam relative to the frame;
Figure 7 illustrates a part of the hydraulic system for braking the rear wheels of the balanced tandem axle;
Figure 8 illustrates operation of the hydraulic cylinders with the first button of the control unit of the hydraulic system for turning the axle beam;
Figure 9 illustrates operation of the hydraulic cylinders with the second button of the control unit of the hydraulic system for turning the axle beam together with operation of the brake cylinder of rear left or rear right wheel, respectively; and

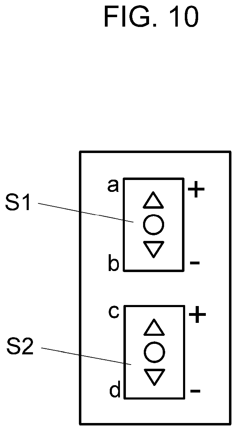

Figure 10 illustrates the control buttons of the control unit of the hydraulic system referred to in the hydraulic schemes in figures 8 and 10.

### DETAILED DESCRIPTION OF THE INVENTION

Turning of a balanced tandem axle relative to a frame 2 of a trailer 1 is described below.

The balanced tandem axle comprises an axle beam 3, which is connected to the frame 2 through a turning axis 4 and enables to turn the axle beam 3 relative to the frame 2 around the turning axis 4.

At the ends of the axle beam 3, perpendicular to the longitudinal axis of the axle beam 3, there are walking beams 5, which can pivot around the longitudinal axis of the axle beam 3. The wheels 6a, 6b, 6c and 6d of a trailer 1 are in turn located at the ends of the walking beams 5, where the rotational axes of said wheels are parallel to the axle beam 3.

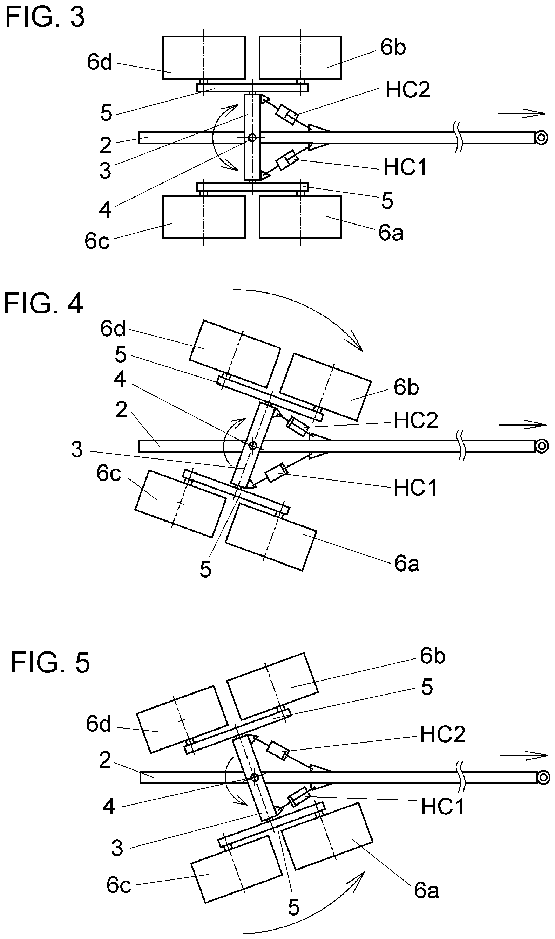

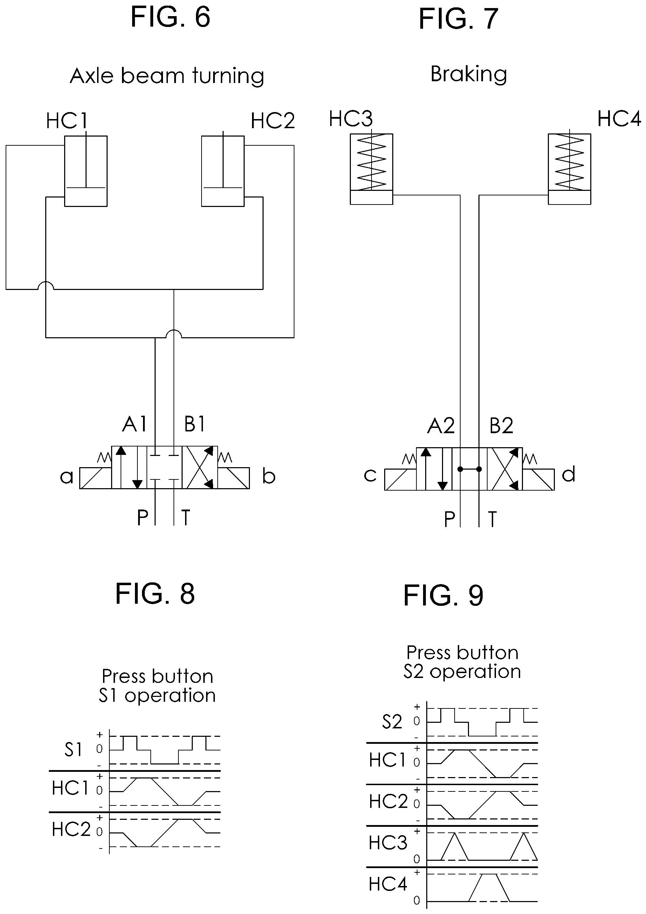

In the embodiment illustrated in figures 3, 4 and 5, double-acting hydraulic cylinders HC1 and HC2 are located between the axle beam 3 and the frame 2 of the trailer 1 on either side of the frame 2 for turning the axle beam 3 relative to the frame 2 of the trailer 1. The hydraulic system further comprises hydraulic brake cylinders HC3 and HC4 at the rear wheels 6c and 6d (Figure 7).

Figure 4 is a bottom view of the left turned position of the balanced tandem axle. For this, there are two options in the system of the invention.

By pressing the button S1 in the direction a or b (i.e. to the left or to the right) and holding it down, the hydraulic cylinders HC1 and HC2 are moved in opposite directions, as a result of which the frame 2 is turned left or right relative to the axle beam 3.

As another option, the button S2 is pressed in the direction c (i.e. to the left), moving the hydraulic cylinders HC1 and HC2 simultaneously in opposite directions, as a result of which the frame 2 is turned relative to the axle beam 3 and further the rear wheel 6c is braked with the brake cylinder HC3. As a result, the rear wheel 6c functions as a turning point for the remaining balanced tandem axle, relative to which other wheels 6a, 6b and 6d will turn.

In this option, a movement can be caused, where the frame 2 is pushed with the hydraulic cylinders HC1 and HC2 around the rear wheel 6c as the turning point forward in the direction shown at the right in Figure 4. Such movement can be used e.g. for moving the vehicle having stuck in rough terrain.

As another option, the button S2 is pressed in the direction d (i.e. to the right), moving the hydraulic cylinders HC1 and HC2 simultaneously in opposite directions, as a result of which the frame 2 is turned relative to the axle beam 3 and further the rear wheel 6d is braked with the brake cylinder HC4. As a result, the rear wheel 6d functions as a turning point for the remaining balanced tandem axle, relative to which other wheels 6a, 6b and 6c will turn.

In this option, a movement can be caused, where the frame 2 is pushed with the hydraulic cylinders HC1 and HC2 around the rear wheel 6d as the turning point forward in the direction shown at the right in Figure 5. Such movement can be used e.g. for moving the vehicle having stuck in rough terrain.

In other words, by turning the balanced tandem axle respectively once around the blocked non-turning rear left wheel 6c and then around the blocked non-turning rear right wheel 6d, such 'stepwise' movement can be used for moving the vehicle stuck in rough terrain forward by pushing with the trailer.

### LIST OF REFERENCE NUMBERS

1 - trailer
2 - frame
3 - axle beam
4 - turning axis
5 - walking beam
6a, 6b - front wheels
6c, 6d - rear wheels
HC1 - hydraulic cylinder
HC2 - hydraulic cylinder
HC3 - brake cylinder
HC4 - brake cylinder
S1 - control button for turning the axle beam
S2 - control button for turning the axle beam together with braking the rear wheel
a - position of the control button S1 for turning the axle beam to the left
b - position of the control button S1 for turning the axle beam to the right
c - position of the control button S2 for turning the axle beam to the left together with braking the rear left wheel
d - position of the control button S2 for turning the axle beam to the right together with braking the rear right wheel

## Claims

1. A system for turning a balanced tandem axle relative to a frame (2) of a trailer (1) around a turning axis (4) located on the frame (2), where the balanced tandem axle comprises an axle beam (3) rotatably attached to the frame (2) of the trailer (1) with walking beams at the ends of the axle beam (3) and perpendicular to the longitudinal axis of the axle beam (3), which are pivotable around the longitudinal axis of the axle beam (3), and wheels of the trailer (1) at the ends of the walking beams, the rotational axes of which are parallel to the axle beam (3), **characterized in that** between the axle beam (3) and the frame (2) of the trailer (1) is at least one hydraulic cylinder (HC1, HC2) for turning the axle beam (3) relative to the frame (2) of the trailer (1), and where a rotation of the left wheel (6c) and a rotation of the right wheel (6d) of the rear wheels (6c, 6d) of the trailer (1), when viewed in the direction of forward movement of the trailer, can be separately blocked with a hydraulic system.

2. The system according to claim 1, **characterized in that** the balanced tandem axle can be turned relative to the frame (2) with a hydraulic system by the hydraulic cylinders (HC1, HC2) between the frame (2) of the trailer and the axle beam (3) on either side of the said frame (2).

3. The system according to claim 1, **characterized in that** for turning the balanced tandem axle to the right, viewed in the forward moving direction, the rear right wheel (6d) of the trailer (1) is braked with the hydraulic system, and at the same time the axle beam (3) is forced to turn relative to the trailer (1) frame (2) by the hydraulic cylinders (HC1, HC2) between the trailer (1) frame (2) and the axle beam (3) on either sides of the said frame (2).

4. The system according to claim 2, **characterized in that** for turning the balanced tandem axle to the left, viewed in the forward moving direction, the rear left wheel (6c) of the trailer (1) is braked with the hydraulic system, and at the same time the axle beam (3) is forced to turn relative to the frame (2) of the trailer (1) by the hydraulic cylinders (HC1, HC2) between the frame (2) of the trailer (1) and the axle beam (3) on either sides of the said frame (2).

5. The system of any preceding claim, **characterized in that** the hydraulic system comprises brake cylinders (HC3, HC4) for braking the rear wheels (6c, 6d).

6. The system of any preceding claim, **characterized in that** the hydraulic system comprises a control unit, which installable in the driver's cab of the vehicle.
